# EUROPEAN PATENT SPECIFICATION

(11) **EP 1 735 361 B1**
(45) Date of publication and mention of the grant of the patent: **23.04.2008**
(21) Application number: 04727096.2
(22) Date of filing: 13.04.2004
(51) Int. Cl.: C08G 18/08, C08G 18/46, C08G 18/42, C08G 18/12, C09J 175/06

(54) **ADHESIVE AQUEOUS COMPOSITIONS**
WÄSSRIGE KLEBSTOFFZUSAMMENSETZUNGEN
COMPOSITIONS ADHESIVES AQUEUSES

(43) Date of publication of application: 27.12.2006
(73) Proprietor: Lamberti Spa, 21041 Albizzate (IT)
(72) Inventor: ALANZO, Vito, I-20022 Castano Primo (IT); DI COSMO, Anna, 00049 Velletri (RM) (IT); GALETTI, Gian, Galeazzo, I-13833 Portula (IT); LI BASSI, Giuseppe, I-21026 Gavirate (IT)
(86) International application number: PCT/IT2004/000201
(87) International publication number: WO 2005/100427

(56) References cited:
- WO-A-01/74921
- GB-A- 1 336 050
- US-A- 4 108 814
- US-A- 5 334 690
- US-A- 5 608 000
- US-A1- 2002 077 413

## Description

### Technical field

This invention is related to polyurethane aqueous compositions suitable as thermo-activable adhesives and to the procedure for their preparation. The adhesive aqueous compositions of the invention have low activation temperature and high open time and are particularly useful as adhesives for leather, textiles, rubber, PVC, ABS and plastic materials in general.

### Background Art

The known polyurethane aqueous compositions suitable as thermo-activable adhesives are mainly of the anionic kind, the polyurethane being anionically modified by means of the introduction of sulfonate groups and/or carboxylic groups and the heat activation characteristics being mainly imparted by polyester diol chains chemically incorporated in the polyurethane itself.

GB 1336050 (BAYER AG) discloses aqueous dispersions of anionic polyurethanes based on N-omega-amino-alkane-omega-aminoalkane sulphonic acid salts, diisocyanates and polyester polyols.

The polyurethane dispersions described in GB 1336050 (BAYER AG) are said to be also useful as glues and adhesives, but not as thermo-activable adhesives.

In EP 3521 A (BAYER AG) aqueous solutions or dispersions of polyisocyanate-polyaddition products characterised by containing from 0.01 to 200 meq (milliequivalents) of sulfonate ions -SO₃ per 100g and from 0.01 to 200 meq of carboxyl groups -COOH per 100g, based on dissolved or dispersed polyisocyanate-polyaddition products are disclosed, together with their use as adhesives; nothing is said about their use as thermo-activable adhesives.

US 4870129 (BAYER AG) relates to thermo-activable adhesives based on an aqueous solution or dispersion of an anionically modified polyurethane and to the use of such a solution or dispersion for the formation of bonds on any substrates.

Although these thermo-activable adhesives possess good activation temperature, medium heat resistance and form homogeneous films, their open time is rather low; this fact causes problems particularly in manual or partially automated ap plication, because the activated surfaces remain workable for a too short time.

Moreover the hydrolytic resistance of the films obtained from these thermo-activable adhesives is poor, impairing the duration of bond strength especially in the presence of dampness.

US 5608000 (H.B. FULLER LIC. FIN.) discloses aqueous dispersion adhesives of anionic polyurethanes for use in thermoforming; the polyurethane is the reaction product of an isocyanate terminated polyurethane prepolymer, and a diamine chain extender. The polyurethane prepolymer is the reaction product of a polyol component and a diisocyanate component, the polyol component including: a sulfonated polyester polyol, a hydroxy carboxylic acid, and a low molecular weight aliphatic diol having a molecular weight of from 60 to 400. Although it is said that the heat resistance of the aqueous polyurethane dispersions is significantly improved and the activation temperature is maintained low, they are not solvent free and their solids content is only about 30-35%; moreover, they lack electrolytic and pH resistance, due to the fact that the polyurethane incorporates carboxylic groups.

lt is an object of the present invention to provide a thermo-activable adhesive having high solids content, high open time, low activation temperature and high stability to hydrolysis and electrolytes.

### Disclosure of Invention

We have now found that such thermo-activable adhesive having the advantages mentioned above is an aqueous dispersion of an anionic semi-crystalline polyurethane containing from 2 to 50 meq of sulfonate groups per 100 g of solids content, the polyurethane being the reaction product of an isocyanate terminated pre-polymer containing from 0.01 to 20 meq of sulfonate groups per 100 g, and an aliphatic diaminosulfonate chain extender.

In the present text with the term "semi-crystalline polyurethane" we mean semi-crystalline polyurethane-polyureas, i.e. high molecular weight compounds containing urea groups in addition to urethane groups for which a melting and crystallisation temperature can be observed and possessing a fusion enthalpy (Δ H_{f}) of at least 15 J/g, measured according to ASTM Standard D3417.

The isocyanate terminated pre-polymer containing sulfonate groups is the reaction product of:
i) a polyisocyanate;
ii) a hydroxy terminated sulfonated polyester polyol having a molecular weight from 400 to 4000 and containing from 0.05 to 50 meq of sulfonate groups per 100 g;
iii) a hydroxy terminated non-ionic polyester polyol having a molecular weight from 400 to 4000 obtained from the reaction of one or more non-sulfonated aliphatic dicarboxylic acids and one or more non-sulfonated aliphatic diols, or a polylactone polyol having a molecular weight from 400 to 4000 started on non-sulfonated aliphatic diols,

the molar ratio between the sulfonated polyester polyol and the non-ionic polyester polyol or the polylactone polyol being comprised between 1:0.3 and 0.1:1.

The sulfonated polyester polyol may incorporate sulfonate groups via sulfonated dicarboxylic acids or sulfonated diols.

The sulfonate functional groups may be in acid or salt form; suitable salt forms are alkali metal salts, or tertiary amine salts.

Examples of the sulfonated diols include 1,4 dihydroxybutane sulfonic acid and succinaldehyde disodium bisulfite.

The preferred sulfonated dicarboxylic acids are aromatic sulfonated dicarboxylic acids, that is dicarboxylic acids in which the carboxyl groups and the sulfonate groups are directly linked to an aromatic ring; 5-suifoisophthalic acid monosodium salt is particularly preferred.

According to a preferred aspect of the invention, the sulfonated polyester polyol is obtained from the reaction of: one or more aromatic sulfonated dicarboxylic acids; one or more non-sulfonated aliphatic dicarboxylic acids selected from the group consisting of succinic, glutaric, adipic, azelaic, suberic, pimelic; phthalic acids, and one or more non-sulfonated aliphatic diols selected from the group consisting of ethylene glycol, diethyleneglycol, 1,4-butanediol, 1,3-propanediol, neopentylglycol, 1,6-hexanediol, 1,4-cyclohexane dimethanol, 1,2-propylene glycol and 2-methyl-1,3 propanediol.

Particularly preferred are sulfonated polyester polyol obtained from the reaction of 5-sulfoisophthalic acid monosodium salt, adipic and iso-phthalic acid, neopentylglycol and diethyleneglycol.

The sulfonated polyester polyols useful for the realisation of the present invention preferably have a molecular weight from 700 to 3000. Molecular weights referred to herein are number average molecular weights.

The non-ionic polyester polyols useful for the realisation of the invention are preferably obtained from the reaction of:one or more non-sulfonated aliphatic dicarboxylic acids selected from the group consisting of succinic, glutaric, adipic, azelaic, suberic, pimelic acids and of 1,4-butanediol, 1,6-hexanediol, or mixture thereof.

The preferred polylactone polyol is ε -caprolactone polyol.

According to a preferred feature of the invention the molar ratio between the sulfonated polyester polyol and the non-ionic polyester polyol or the polylactone polyol is comprised between 0.8:1 and 1:0.8.

The polyisocyanates suitable for the realisation of the present invention are either of the aromatic, or of the aliphatic or of the cycloaliphatic type, such as 4,4' -dicyclohexyl-methanediisocyanate, 1-isocyanate-3-isocyanate-methyl-3,5,5-trimethyl-cyclohexane (or isophorone diisocyanate), hexamethylenediisocyanate, 2,4- toluenediisocyanate either alone or in admixture with the 2,6-toluenediisocyanate isomer, and 4,4' diphenyl-methanediisocyanate, m-tetramethylxylylene diisocyanate, dicyclohexylmethane-4,4'-diisocyanate, or mixtures thereof; particularly preferred are isophorone diisocyanate, hexamethylenediisocyanate and mixture thereof.

The isocyanate terminated pre-polymer containing from 0.01 to 20 meq of sulfonate groups per 100 g is prepared by adding a polyisocyanate to a mixture of:

- a hydroxy terminated non-ionic polyester polyol having a molecular weight from 400 to 4000 and obtained from the reaction of one or more non-sulfonated aliphatic dicarboxylic acids and one or more non-sulfonated aliphatic diols, or a polylactone polyol having a molecular weight from 400 to 4000 started on non-sulfo nated aliphatic diols;

- a hydroxy terminated sulfonated polyester polyol having a molecular weight from 400 to 4000 and containing from 0.05 to 50 meq of sulfonate groups per 100 g,

and stirring the reaction mixture, preferably without any solvent, at 40°-100°C for 0.5-3 hours until the isocyanate va lue remains constant; the molar ratio between the polyisocyanate and the sum of the polyols shall be between 1.2:1 and 2.5:1, preferably between 1.5:1 and 2:1, and the molar ratio between the sulfonated polyester polyol and the non-ionic polyester polyol or polylactone polyol shall be between 1:0.3 and 0.1:1, preferably between 0.8:1 and 1:0.8.

The isocyanate terminated pre-polymer containing sulfonate groups is then dissolved in a suitable solvent, preferably acetone or methyl ethyl ketone, and chain-lengthened with an aqueous solution of an aliphatic diaminosulfonate.

The aliphatic diaminosulfonate chain extender is preferably an aliphatic diaminosulfonate represented by the formula H₂N-A-NH-B-SO₃ M⁺ in which A and B represent an aliphatic hydrocarbon group having from 2 to 6 carbon atoms, and M⁺ represents a sodium or potassium cation or a substituted or unsubstituted ammonium cation.

More preferably, the aliphatic diaminosulfonate chain extender is sodium-N-(2-aminoethyl)-2-aminoethane sulfonate (AAS salt).

In combination with the aliphatic diaminosulfonate chain extender, other normally used non-sulfonated chain extender may be employed, such as other hydrazine or amine functionalised cha in extenders.

The molar ratio between the isocyanate terminated pre-polymer and the aliphatic diaminosulfonate is comprised between 1:0.05 and 1:1, preferably between 1:0.2 and 1:0.6.

The resulting polyurethane solution is then mixed with water under vigorous stirring until a fine dispersion is obtained; the solvent is then distilled off and the amount of water is adjusted to obtain a solids content from 30 to 60% by weight.

According to a preferred advantageous aspect of the present invention the solids content of the aqueous dispersion of polyurethane is from 40 to 50% by weight and Brookfield viscosity is in the range of 20 to 2000 mPa∗s measured at 23°C and 50 rpm, according to EN ISO 2555.

In industrial application a high solids content is desired to speed up the drying step which precedes the heat activation, and the low viscosity enables easy application of the product.

The polyurethane of the aqueous dispersion of the invention contains from 2 to 50 meq, preferably from 10 to 25 meq, of sulfonate groups per 100 g of solids content.

Thermo-activable adhesives comprising the polyurethane dispersions described above and, optionally, the auxiliary agents normally used in the field of adhesives, such as water dispersible polyisocyanate cross-linking agents, are another fundamental aspect of the present invention.

The aqueous dispersions of anionic polyuretha ne of the invention and the thermo-activable adhesives comprising them a re suitable for bonding any substrates, particularly thermolabile substrates, e.g. paper, textiles, non woven textiles, cardboard, wood, metal or leather, rubber materials or plastics, and are particularly suitable for bonding footwear materials.

The thermo-activable adhesives of the invention can be used according to the normal procedure: the substrates coated with the adhesive are dried to obtain a tack-free film, heat-activated and bonded under pressure.

The thermo-activable adhesives of the invention exhibit low activation temperature and high open time, as it is shown from the data reported in Table 2.

Other advantages of the thermo-activable adhesives of the invention are their resistance to hydrolysis and the homogeneity of the film obtained therewith.

The examples given below serve to further illustrate the invention.

In the following examples all parts and percentages are by weight unless otherwise specified.

**Examples.**

In the examples the following compounds are used:

Polyester 1 = a sulfonated polyester polyol from adipic acid, isophthalic acid, 5-sulfoisophthalic acid monosodium salt diethyleneglycol and neopentyl glycol, having 6% by weight of 5-sulfoiso phthalic acid monosodium salt and molecular weight 1000 g/mol ;

Polyester 2 = adipic acid-tetramethylenediol polyester, having molecular weight 1000 g/mol;

Polyester 3 = adipic acid-tetramethylenediol polyester, having molecular weight 2000 g/mol;

Polyester 4 = adipic acid-tetramethylenediol polyester, having molecular weight 3000 g/mol;

Polyisocyanate 1 = 1,6-diisocyanatohexane;

Polyisocyanate 2 = isophorone diisocyanate;

AAS salt = sodium salt of N-(2-aminoethyl)-2-aminoethane sulphonic acid (35.30% in water);

EDA = ethylene diamine.

**Example 1**

A reaction vessel, equipped with internal thermometer, stirrer and cooler, is filled, under nitrogen atmosphere and at room temperature, with 105.042 g (210.084 meq) of Polyester 1, 315.126 g (210.084 meq) of Polyester 4 and 0.105 g of benzoyl chloride. The mixture is heated to 50° C, then 40.000 g (476.190 meq) of Polyisocyanate 1 and 26.464 g (238.095 meq) of Polyisocyanate 2 are added und er stirring. The reaction temperature is brought to 90° C and maintained for approximately 2 hours, until the titrimetric determination of the free NCO-groups still present gives a value of 2.54% by weight (value determined in this example as well as in the other examples according to the standard method ASTM D2572).

The reaction mixture is then cooled and diluted with 973 g of acetone while the temperature is maintained at 50° C. Subsequently a solution of 1.326 g (44.118 meq) of EDA and 28.517 g (102.941 meq) of AAS salt in 27.119 g of water is stirred into the homogeneous acetonic solution at 40° C. After 5 minutes 452.455 g of demineralised water are ad ded at a high stirring speed.

The organic solvent (acetone) is distilled off in vacuum.

A stable finely divided dispersion is obtained, with solids content of 50% by weight, pH 7.77 and Brookfield viscosity of 225 mPa∗s (at 23°C, 50 rpm, spindle No. 2).

**Example 2 (comparison example).**

A reaction vessel, equipped with internal thermometer, stirrer and cooler, is filled, under nitrogen atmosphere and at room temperature, with 105.042 g (210.084 meq) of Polyester 2, 315.126 g (210.084 meq) of Polyester 4 and 0.105 g of benzoyl chloride. The mixture is heated to 50° C, then 40.000 g (476.190 meq) of Polyisocyanate 1 and 26.464 g (238.095 meq) of Polyisocyanate 2 are added under stirring. The reaction temperature is brought to 90° C and maintained for approximately 2 hours, until the titrimetric determination of the free NCO-groups still present gives a value of 2.54% by weight.

The reaction mixture is then cooled and diluted with 973 g of acetone while the temperature is maintained at 50° C. Subsequently a solution of 1.326 g (44.118 meq) of EDA and 32.591 g (117.647 meq) of AAS salt in 30.235 g of water is stirred into the homogeneous acetonic solution at 40° C. After 5 minutes 448.141 g of demineralized water are added at a high stirring speed.

The organic solvent (acetone) is distilled off in vacuum.

A stable finely divided dispersion is obtained, with solids content of 50% by weight, pH 6.85 and Brookfield viscosity of 250 mPa-s (at 23°C, 50 rpm, spindle No. 2).

**Example 3 (comparison example)**

A reaction vessel, equipped with internal thermometer, stirrer and cooler, is filled, under nitrogen atmosphere and at room temperature with, 420.168 g (420.168 meq) of Polyester 3 and 0.105 g of benzoyl chloride. The mixture is heated to 50° C, then 40.000 g (476.190 meq) of Polyisocyanate 1 and 26.464 g (238.095 meq) of Polyisocyanate 2 are added under stirring. The reaction temperature is brought to 90° C and maintained for approximately 2 hours, until the titrimetric determination of the free NCO-groups still present gives a value of 2.54% by weight.

The reaction mixture is then cooled and diluted with 973 g of acetone while the temperature is maintained at 50° C. Subsequently a solution of 1.326 g (44.118 meq) of EDA and 32.591 g (117.647 meq) of AAS salt in 30.235 g of water is stirred into the homogeneous acetonic solution at 40° C. After 5 minutes 448.141 g of demineralised water are added at a high stirring speed.

The organic solvent (acetone) is distilled off in vacuum.

A stable finely divided dispersion is obtained, with solids content of 50% by weight, pH 6.70 and Brookfield viscosity of 265 mPa*s (at 23°C, 50 rpm, spindle No. 2).

**Example 4**

A reaction vessel, equipped with internal thermometer, stirrer and cooler, is filled, under nitrogen atmosphere and at room temperature, with 105.042 g (210.084 meq) of Polyester 1, 210.084 g (210.084 meq) of Polyester 3 and 0.105 g of benzoyl chloride. The mixture is heated to 50° C, then 40.000 g (476.190 meq) of Polyisocyanate 1 and 26.464 (238.095 meq) of Polyisocyanate 2 are added under stirring. The reaction temperature is brought to 90° C and maintained for approximately 2 hours, until the titrimetric determination of the free NCO-groups still present gives a value of 3.24% by weight. The reaction mixture is then cooled and diluted with 763.181 g of acetone while the temperature is maintained at 50° C. Subsequently a solution of 1.326 g (44.118 meq) of EDA and 28.517 g (102.941 meq) of AAS salt in 27.119 g of water is stirred into the homogeneous acetonic solution at 40° C. After 5 minutes 347.413 g of demineralised water are added at a high stirring speed.

The organic solvent (acetone) is distilled off in vacuum.

A stable finely divided dispersion is obtained, with solids content of 50% by weight, pH 6.73 and Brookfield viscosity of 310 mPa*s (at 23°C, 50 rpm, spindle No. 2).

**Example 5 (comparison example)**

A reaction vessel, equipped with internal thermometer, sti rrer and cooler, is filled, under nitrogen atmosphere and at room temperature, with 105.042 g (210.084 meq) of Polyester 2, 210.084 g (210.084 meq) of Polyester 3 and 0.105 g of benzoyl chloride. The mixture is heated to 50° C, then 40.000 g (476.190 meq) of Polyisocyanate 1 and 26.464 g (238.095 meq) of Polyisocyanate 2 are added under stirring. The reaction temperature is brought to 90° C and maintained for approximately 2 ho urs, until the titrimetric determination of the free NCO-groups still present gives a value of 3.24% by weight. The reaction mixture is then cooled and diluted with 763.181 g of acetone while the temperature is maintained at 50° C. Subsequently a solution of 1.326 g (44.118 meq) of EDA and 32.591 g (117.647 meq) of AAS salt in 30.235 g of water is stirred into the homogeneous acetonic solution at 40° C. After 5 minutes 343.099 g of demineralised water are added at a high stirring speed.

The organic solvent (acetone) is distilled off in vacuum.

A stable finely divided dispersion is obtained, with solids content of 50% by weight, pH 6.60 and Brookfield viscosity of 285 mPa*s (at 23°C, 50 rpm, spindle No. 2).

In Table 1, the characteristics of the dispersions obtained in Ex. 1-5 are reported.

**Table 1**

| Dispersion | Rₘ NCO/OH | Rₘ NCO/AAS | Rₘ NCO/NH | meq SO₃⁻ in pre-poly. | meq SO₃⁻ tot. |
|---|---|---|---|---|---|
| Ex.1 | 1.70 | 2.86 | 2.00 | 4.83 | 15.06 |
| Ex.2* | 1.70 | 2.50 | 1.82 | 0 | 11.78 |
| Ex.3* | 1.70 | 2.50 | 1.82 | 0 | 11.78 |
| Ex. 4 | 1.70 | 2.86 | 2.00 | 6.16 | 19.08 |
| Vex.5* | 1.70 | 2.50 | 1.82 | 0 | 14.91 |

| | | | | | |
|---|---|---|---|---|---|
| *comparison example | | | | | |

Rₘ NCO/OH = molar ratio of NCO/OH in the preparation of the prepolymer

Rₘ NCO/ AAS = molar ratio of NCO/ AAS salt in the preparation of the polyurethane

Rₘ NCO/NH = molar ratio of NCO/ NH in the preparation of the polyurethane

meq SO₃⁻ in pre-poly.= milliequivalents of SO₃⁻ in 100 g of the pre-polymer

meq SO₃⁻ tot. = milliequivalents of SO₃⁻ in 100 g of the polyurethane

**Evaluation tests.**

**a) Determination of activation temperature and open time.**

Bonds were produced by means of the dispersions prepared as described in Ex. 1-5.

The material to be bonded was a SBR material. All tests were carried out in accordance with UNI EN 1392.

The activation temperatures were measured according to UNI EN 12961 (optimum activation temperatures) and are reported in Table 2.

The open time (the period of time during which the activated surfaces remain workable and components can be bonded by the application of pressure) was measured after activation at the optimum activation temperature; open times are reported in Table 2.

The open time is related to the rate of re-crystallisation of the heat activated polymer, the slower the polymer re-crystallises the longer is the open time.

**Table 2**

| Sample | Activation temperature (°C) | Open time (min. ) |
|---|---|---|
| Ex. 1 | 45 | 10 |
| Ex. 2* | 45 | 6 |
| Ex. 3* | 45 | 4 |
| Ex. 4 | 45 | 8 |
| Ex. 5* | 45 | 4 |

| | | |
|---|---|---|
| * comparison example | | |

**b) Determination of melting and crystallisation temperature and of fusion enthalpy by DSC.**

DSC ( Perkin Elmer, DSC7) was used to study non isothermal crystallisation behaviour of the films obtained from the dispersions of Examples 1-5 and from Dispercoll ® U54, a thermo-activable polyurethane from Bayer AG, Germany. The data obtained are reported in Table 3.

The melting peak temperature (T*ₚₘ*) and the crystallisation peak temperature (T_{pc}) were measured according to standard test method ASTM D3418-99.

The fusion enthalpy (ΔH_{f}) was measured according to standard test method ASTM D3417-99.

All samples from Ex. 1-5 were dried in a vacuum oven prior to measuring.

A sample (about 10 mg) was weighed in an aluminium DSC sample pan. The calorimeter was operated with a stream of oxygen-free, dry nitrogen flowing through the chamber throughout the experiment. A preliminary thermal cycle was performed and recorded by heating the sample at a rate of 10°C/min from 50°C below to 30°C above the melting point. The temperature is held for 10 min. The sample is then cooled to 50°C below the peak crystallisation temperature at a rate of 10 ºC/min. The sample is re-heated at a rate of 10 °C/min. The desired temperatures are measured.

**Table 3**

| Sample | Tₚₘ (°C) | T_{pc} (°C) | ΔH_{f} (J/g) |
|---|---|---|---|
| Ex. 1 | 48 | -1 | 36 |
| Ex. 2 | 48 | 4 | 36 |
| Ex. 3 | 50 | 12 | 43 |
| Ex. 4 | 49 | 2 | 42 |
| Ex. 5* | 49 | 15 | 44 |
| Dispercoll® U54 | 50 | 9 | 45 |

| | | | |
|---|---|---|---|
| *comparison example | | | |

**c) Determination of isothermal crystallisation rate by DSC.**

DSC was also used to study isothermal crystallisation behaviour of the films obtained from the dispersions of Ex. 1-5 and from Dispercoll® U54.

All samples were dried in a vacuum oven prior to measuring.

A sample (about 10 mg) was weighed in an aluminium DSC sample pan. The calorimeter was operated with a stream of oxygen-free, dry nitrogen flowing through the chamber throughout the experiment. The sample was heated at a rate of 10 °C/min up to 70°C and held for 10 mi nutes. The isothermal crystallisation temperature was reached by rapidly cooling the sample (quenching) at 100 °C/min. The sample was then held at that temperature for 45 minutes to reach thermal equilibrium and ensure that the crystallisation was complete. The sample was then heated again at 10 °C/min to 70°C and held for an additional 10 minutes, then quenched to another isothermal crystallisation temperature for 45 minutes to complete the crystallising process. The entire procedure was repeated for a series of isothermal crystallisation temperatures and crystallisation peaks at the different crystallisation temperatures were collected. After obtaining the DSC curves of the crystallisation peaks, the enthalpy of crystallisation (ΔH) was calculated. Once this information was obtained, the time needed to complete half time of crystallisation (t_{1/2}) was determined using a partial area software program. By comparing t_{1/2} , reported in Table 4, it is possible to compare the relative crystallisation rates of the films.

**Table 4**

| Sample | t _{1/2}(min.) | | | |
|---|---|---|---|---|
| | Temperature (°C) | | | |
| | 15 | 20 | 25 | 28 |
| Ex.1 | 3.5 | 6.6 | 19 | >30 |
| Ex. 2* | 2.0 | 4.0 | 12 | 25 |
| Ex. 3* | 1.2 | 2.8 | 10 | 22 |
| Ex. 4* | 3.0 | 5.5 | 15 | 27 |
| Ex. 5* | 1.0 | 1.5 | 5 | 15 |
| Dispercoll ® U54 | 2.2 | 3.8 | 9 | 19 |

| | | | | |
|---|---|---|---|---|
| *comparison example | | | | |

Both isothermal and non-isothermal DSC crystallisation studies showed that the introduction of sulfonate groups in the backbone of the polyurethane according to the invention doesn't influence significantly the melting temperature but decreases the crystallisation rate of polymers, so providing a longer open time.

**d) Evaluation of hydrolytic resistance.**

The hydrolytic resistance of the films obtained from the dispersions of Ex. 1-5 and from Dispercoll ® U54 was evaluated as follows.

The films were immersed in water for 24 hours at room temperature, then dried for 24 hours at 25°C and 60 wt% r.h.

The film obtained from the dispersions according to the invention (Ex. 1 and 4) remained flexible and strong; the films obtained from the dispersions of the comparison examples and from Dispercoll ® U54 became very weak and brittle.

## Claims

1. Aqueous dispersion of an anionic semi-crystalline polyurethane containing from 2 to 50 meq of sulfonate groups per 100 g of solids content and having a solids content from 30 to 60% by weight, **characterised by** the fact that the anionic semi-crystalline polyurethane is the reaction product of:
a) an isocyanate terminated pre-polymer containing from 0.01 to 20 meq of sulfonate groups per 100 g of the pre-polymer, obtained from the reaction of:
i) a polyisocyanate;
ii) a hydroxy terminated sulfonated polyester polyol having a molecular weight from 400 to 4000 and containing from 0.05 to 50 meq of sulfonate groups per 100 g;
iii) a hydroxy terminated non-ionic polyester polyol having a molecular weight from 400 to 4000 obtained from the reaction of one or more non-sulfonated aliphatic dicarboxylic acids and one or more non-sulfonated aliphatic diols, or a polylactone polyol having a molecular weight from 400 to 4000 started on non-sulfonated aliphatic diols,
the molar ratio between the sulfonated polyester polyol and the non-ionic polyester polyol or the polylactone polyol being comprised between1:0.3 and 0.1:1;
b) an aliphatic diaminosulfonate chain extender.

2. Aqueous dispersion according to claim 1., wherein the non-sulfonated aliphatic dicarboxylic acid is selected from the group consisting of succinic, adipic, glutaric, azelaic, suberic, pimelic acids and the non-sulfonated X aliphatic diol is 1,4- butanediol , 1,6-hexanediol or mixture thereof.

3. Aqueous dispersion according to claim 1. or 2., wherein the hydroxy terminated sulfonated polyester polyol is obtained from the reaction of one or more aromatic sulfonated dicarboxylic acids; one or more non-sulfonated aliphatic dicarboxylic acids selected from the group consisting of succinic, adipic, glutaric, azelaic, suberic, pimelic; phthalic acids, and one or more non-sulfonated aliphatic diols selected from the group consisting of ethylene glycol, diethyleneglycol, 1,4-butanediol, 1,3-propanediol, neopentylglycol, 1,6-hexanediol, 1,4-cyclohexane dimethanol, 1,2-propylene glycol and 2-methyl-1,3 propanediol.

4. Aqueous dispersion according to claim 3., wherein the polyester sulfonated polyol is obtained from the reaction of 5-sulfoisophthalic acid monosodium salt, adipic and iso-phthalic acid, neopentylglycol and diethyleneglycol.

5. Aqueous dispersion according to any of the claim from 1. to 4., wherein the aliphatic diaminosulfonate chain extender is represented by the formula H₂N-A-NH-B-SO₃- M⁺ in which A and B represent an aliphatic hydrocarbon group having from 2 to 6 carbon atoms, and M⁺ represents a sodium or potassium cation or a substituted or unsubstituted ammonium cation.

6. Aqueous dispersion of an anionic polyurethane according to 5., wherein the aliphatic diaminosulfonate is sodium-N-(2-aminoethyl)-2-aminoethane sulfonate (AAS salt).

7. Process for the preparation of the aqueous dispersion according to claim 1., comprising the following steps:
i) preparing a isocyanate terminated pre-polymer containing sulfonate groups adding a polyisocyanate to a mixture of a non-ionic polyester polyol or a polylactone polyol and of a sulfonated polyester polyol, all of them as defined in claim 1., the molar ratio between the polyisocyanate and the sum of the polyols being between 1.2:1 and 2.5:1 and the molar ratio between the sulfonated polyester polyol and the non-ionic polyester polyol or the polylactone polyol being between 1:0.3 and 0.1:1, and stirring the reaction mixture at 40°-100°C for 0.5-3 hours;
ii) dissolving said isocyanate terminated pre-polymer in acetone or ethyl methyl ketone and chain-lengthening it with an aqueous solution of an aliphatic diaminosulfonate, the molar ratio between the isocyanate terminated pre-polymer and the aliphatic diaminosulfonate being between 1:0.05 and 1:1;
iii) mixing the resulting polyurethane solution with water under vigorous stirring until a fine dispersion is obtained, distilling off the acetone or the ethyl methyl ketone and adjusting the amount of water to obtain a solids content from 30 to 60% by weight.

8. Thermo-activable adhesives comprising an aqueous dispersion according to any of the claims from 1. to 6.

9. Use of the thermo-activable adhesives of claim 8 in bonding leather, textiles, rubber materials, plastics and/or footwear materials.

## Patentansprüche

1. Wässrige Dispersion eines anionischen semikristallinen Polyurethans, die zwischen 2 und 50 mEq Sulfonatgruppen pro 100 g Festkörpergehalt enthält, wobei der Festkörpergehalt 30 bis 60% Gewichtsanteil beträgt, **dadurch gekennzeichnet, dass** das anionische semikristalline Polyurethan ein Reaktionsprodukt von:
a) einem isocyanatterminierten Prepolymer ist, das zwischen 0,01 und 20 mEq Sulfonatgruppen pro 100 g Prepolymer enthält und gewonnen wird aus der Reaktion:
i) eines Polyisocyanats;
ii) eines hydroxyterminierten sulfonierten Polyesterpolyols mit einem Molekulargewicht zwischen 400 und 4000, das zwischen 0,05 und 50 mEq Sulfonatgruppen pro 100 g enthält;
iii) eines hydroxyterminierten nichtionischen Polyesterpolyols mit einem Molekulargewicht zwischen 400 und 4000, das aus der Reaktion einer oder mehrerer nicht-sulfonierter aliphatischer Dicarboxylsäuren und einer oder mehrerer nicht-sulfonierter aliphatischer Diole gewonnen wird, oder eines Polylaktonpolyols, das ausgehend von nicht-sulfonierten aliphatischen Diolen, ein Molekulargewicht zwischen 400 und 4000 aufweist,
wobei das Molverhältnis zwischen dem sulfonierten Polyesterpolyol und dem nichtionischen Polyesterpolyol zwischen 1:0,3 und 0,1:1 beträgt;
b) eines Diaminosulfonat-Kettenverlängerer.

2. Wässrige Dispersion gemäß Patentanspruch 1., in der die nicht-sulfonierte aliphatische Dicarboxylsäure aus der aus Bernstein-, Adipin-, Glutar-, Azelain-, Suberin-, Pimelinsäure bestehenden Gruppe ausgewählt wird und das nicht-sulfonierte aliphatische Diol ein 1,4- Butandiol , 1,6-Hexandiol oder eine Mischung aus diesen ist.

3. Wässrige Dispersion gemäß Patentanspruch 1. oder 2., in der das hydroxyterminierte sulfonierte Polyesterpolyol gewonnen wird aus der Reaktion mit: einer oder mehreren aromatischen sulfonierten Dicarboxylsäuren, die aus der aus Bernstein-, Adipin-, Glutar-, Azelain-, Suberin-, Pimelinsäure bestehenden Gruppe ausgewählt wird; Phthalsäuren und einem oder mehreren nicht-sulfonierten aliphatischen Diolen, die aus der aus Ethylenglykol, Diethylenglykol, 1,4-Butandiol, 1,3-Propandiol, Neopentylglykol, 1,6-Hexandiol, 1,4-Cyclohexandimethanol, 1,2-Propylenglycol und 2-Methyl-1,3 Propandiol bestehenden Gruppe besteht.

4. Wässrige Dispersion gemäß Patentanspruch 3., in der das sulfonierte Polyesterpolyol aus der Reaktion von 5-Sulfoisophthalsäure-Mononatriumsalz, Adipin- und Isophthalsäure, Neopentylglykol und Diethylenglykol gewonnen wird.

5. Wässrige Lösung gemäß jeder der Patentansprüche von 1. bis 4., in der der aliphatische Diaminosulfonat-Kettenverlängerer durch die Formel H₂N-A-NH-B-SO₃⁻ M⁺ dargestellt wird, in der A und B eine aliphatische Hydrokarbongruppe mit 2 bis 6 Kohlenstoffatomen besitzt und M⁺ ein Natrium- oder Kaliumkation oder ein substituiertes oder unsubstituiertes Ammoniumkation darstellt.

6. Wässrige Lösung eines anionischen Polyurethans gemäß 5., in der das aliphatische Diaminosulfat ein Natrium-N-(2-aminoethyl)-2-Aminoethansulfonat (AAS-Salz) ist.

7. Prozess zur Zubereitung der wässrigen Lösung gemäß Patentanspruch 1., der bestehend aus folgenden Schritten:
i) Zubereitung eines Sulfonatgruppen enthaltenden isocyanatterminierten Prepolymers durch Hinzufügen eines Polyisocyanats zu einer Mischung aus einem nichtionischen Polyesterpolyol oder eines Polylaktonpolyols und eines sulfonierten Polyesterpolyols, jeweils wie in Patentanspruch 1. definiert, wobei das Molverhältnis zwischen Polyisocyanat und der Summe der Polyole zwischen 1,2:1 und 2,5:1 und das Molverhältnis zwischen dem sulfonierten Polyesterpolyol und dem nichtionischen Polyesterpolyol oder dem Polylaktonpolyol zwischen 1:0,3 und 0,1:1 liegt und die Reaktionsmischung bei 40°-100°C über 0,5-3 Stunden gerührt wird;
ii) Auflösung des besagten isocyanatterminierten Prepolymers in Aceton oder Ethylmethylketon und dessen Kettenverlängerung mit einer wässrigen Lösung aus einem aliphatischen Diaminosulfat, wobei das Molverhältnis zwischen dem isocyanatterminierten Prepolymer und dem aliphatischen Diaminosulfat zwischen 1:0,05 und 1:1 liegt;
iii) Mischen der resultierenden Polyurethanlösung mit Wasser unter energischem Rühren bis zum Erhalt einer feinen Dispersion, wobei das Aceton oder das Ethylmethylketon wegdestilliert und die Wassermenge reguliert wird, um einen Feststoffgehalt zwischen 30 und 60% Gewichtsanteilen zu erhalten.

8. Thermoaktivierbare Adhäsive, die eine wässrige Dispersion enthalten gemäß jeder der Patentansprüche von 1. bis 6.

9. Verwendung der in Patentanspruch 8 aufgeführten thermoaktivierbaren Adhäsive zum Bekleben von Leder, Textilien, Gummimaterialien, Kunststoffen und/oder Schuhmaterialien.

## Revendications

1. Dispersion aqueuse de polyuréthanne anionique semi-cristallin contenant de 2 à 50 meq de groupes sulfonate par 100 g de matière solide et ayant une teneur en solides de 30 à 60 % en poids, ladite dispersion étant **caractérisée en ce que** ledit polyuréthanne est le produit de la réaction :
a) d' un prépolymère à terminaison isocyanate contenant de 0,01 à 20 meq de groupes sulfonate par 100 g dudit prépolymère, lui-même obtenu par réaction : i) d' un polyisocyanate ;
ii) d' un polyester polyol sulfoné à terminaison hydroxy ayant un poids moléculaire de 400 à 4000 et contenant de 0,05 à 50 meq de groupes sulfonate par 100 g ;
iii) d' un polyester polyol non ionique à terminaison hydroxy ayant un poids moléculaire de 400 à 4000, obtenu par réaction d' un ou plusieurs acides dicarboxyliques aliphatiques non sulfonés avec un ou plusieurs diols aliphatiques non sulfonés, ou d' un polylactone polyol ayant un poids moléculaire de 400 à 4000 ayant comme produits de départ des diols aliphatiques non sulfonés,
le rapport molaire du polyester polyol sulfoné sur le polyester polyol non ionique ou le polylactone polyol étant compris entre 1/0,3 et 0,1/1;
b) d' un extenseur de chaîne diaminosulfonate aliphatique.

2. Dispersion aqueuse selon la revendication 1, l' acide dicarboxylique aliphatique non sulfoné étant choisi dans le groupe formé par les acides succinique, adipique, glutarique, azélaïque, subérique et pimélique, et le diol aliphatique non sulfoné étant le 1,4-butanediol, le 1,6-hexanediol ou l'un de leurs mélanges.

3. Dispersion aqueuse selon la revendication 1 ou 2, le polyester polyol sulfoné à terminaison hydroxy étant obtenu en faisant réagir : un ou plusieurs acides dicarboxyliques sulfonés aromatiques ; un ou plusieurs acides dicarboxyliques aliphatiques non sulfonés choisis dans le groupe formé par les acides succinique, adipique, glutarique, azélaïque, subérique et pimélique ; des acides phtaliques ; et un ou plusieurs diols aliphatiques non sulfonés choisis dans le groupe formé par l'éthylèneglycol, le diéthylèneglycol, le 1,4-butanediol, le 1,3-propanediol, le néopentylglycol, le 1,6-hexanediol, le 1,4-cyclohexanediméthanol, le 1,2-propylèneglycol et le 2-méthyl-1,3-propanediol.

4. Dispersion aqueuse selon la revendication 3, le polyester polyol sulfoné étant obtenu en faisant réagir le sel monosodique de l' acide 5-sulfoisophtalique, de l'acide adipique, de l' acide isophtalique, du néopentylglycol et du diéthylèneglycol.

5. Dispersion aqueuse selon l'une quelconque des revendications 1 à 4, l' extenseur de chaîne diaminosulfonate aliphatique répondant à la formule H₂N-A-NH-B-SO₃⁻ M⁺, dans laquelle A et B représentent un groupe hydrocarbure aliphatique ayant de 2 à 6 atomes de carbone et M⁺ représente un cation sodium ou potassium ou un cation ammonium substitué ou non.

6. Dispersion aqueuse d' un polyuréthanne anionique selon la revendication 5, le diaminosulfonate aliphatique étant le *N*-(2-aminoéthyl)-2-aminoéthanesulfonate de sodium (sel « AAS »).

7. Procédé de préparation de la dispersion aqueuse de la revendication 1, comprenant les étapes consistant à :
i) préparer un prépolymère à terminaison isocyanate contenant des groupes sulfonate, ajouter un polyisocyanate à un mélange d' un polyester polyol non ionique ou d' un polylactone polyol avec un polyester polyol sulfoné, tous étant tels que définis à la revendication 1, le rapport molaire du polyisocyanate sur la somme des polyols étant compris entre 1,2/1 et 2,5/1 et le rapport molaire entre le polyester polyol sulfoné et le polyester polyol non ionique ou le polylactone polyol étant compris entre 1/0,3 et 0,1/1, puis mélanger le mélange réactionnel à une température allant de 40 à 100 °C pendant une durée de 0,5 à 3 heures ;
ii) dissoudre ledit prépolymère à terminaison isocyanate dans de l' acétone ou de l' éthylméthylcétone et allonger sa chaîne à l' aide d' une solution aqueuse d'un diaminosulfonate aliphatique, le rapport molaire du prépolymère à terminaison isocyanate sur le diaminosulfonate aliphatique étant compris entre 1/0,05 et 1/1 ;
iii) mélanger la solution de polyuréthanne ainsi obtenue avec de l' eau, sous agitation vigoureuse, jusqu' à obtention d' une fine dispersion, puis éliminer par distillation l'acétone ou l' éthylméthylcétone et ajuster la quantité d' eau de manière à obtenir une teneur en solides de 30 à 60 % en poids.

8. Adhésifs thermo-activables comprenant une dispersion aqueuse selon l'une quelconque des revendications 1 à 6.

9. Utilisation des adhésifs thermo-activables de la revendication 8 pour lier cuir, textiles, matériaux à base de caoutchouc, plastiques et/ou matériaux utilisés dans les chaussures.
